# EUROPÄISCHE PATENTSCHRIFT

(11) **EP 1 192 978 B1**
(45) Veröffentlichungstag und Bekanntmachung des Hinweises auf die Patenterteilung: **29.12.2004**
(21) Anmeldenummer: 01123631.2
(22) Anmeldetag: 02.10.2001
(51) Int. Cl.: B01D 21/24, B01D 17/02

(54) **Anordnung und Verfahren zum Abziehen von Flüssigkeit aus einem Behälter wie Becken**
Arrangement and process for withdrawing a liquid from a container such as a basin
Dispositif et procédé de soutirage de liquide d'un récipient tel qu'un bassin

(30) Priorität: 02.10.2000 DE 10049132
(43) Veröffentlichungstag der Anmeldung: 03.04.2002
(73) Patentinhaber: Passavant-Roediger Umwelttechnik GmbH, 65322 Aarbergen (DE)
(72) Erfinder: Huth, Robert, 63776 Mömbris (DE)
(74) Vertreter: Stoffregen, Hans-Herbert, Dr. Dipl.-Phys.

(56) Entgegenhaltungen:
- EP-A- 0 979 668
- DE-A- 19 636 153
- DE-A- 19 742 594
- DE-U- 29 722 637
- US-A- 5 358 644

## Beschreibung

Die Erfindung bezieht sich auf eine Anordnung zum Abziehen von Flüssigkeit aus einem Behälter wie einem Becken, insbesondere Klarwasser aus einem SBR, umfassend zumindest eine Auftriebseinrichtung vorzugsweise in Form von zwei über- und/oder nebeneinander angeordneten Hohlkörpern, von denen ein erster Hohlkörper mit Gas und ein zweiter Hohlkörper wahlweise mit Gas oder Flüssigkeit befüllbar ist, sowie zumindest ein von der Auftriebseinrichtung ausgehendes Öffnungen zum Ableiten der Flüssigkeit aufweisendes erstes Rohrelement. Ferner bezieht sich die Erfindung auf ein Verfahren zum Abziehen von Flüssigkeit aus einem Behälter wie Becken, insbesondere zum Abziehen von Klarwasser aus einem SBR, über ein von einem Auftriebskörper ausgehendes Öffnungen zum Abziehen der Flüssigkeit aufweisendes insbesondere rohrförmiges Dekantierelement wie -rohr.

Beim Klären von Schlamm wird durch Sedimentation der Feststoffteilchen ein feststoffarmes, geklärtes Wasser, sogenanntes Klarwasser gewonnen. Hierzu werden Klärbekken wie Absatzbecken benutzt, die aus angelegten Teichen oder aus betonierten Becken bestehen, in die ein zu klärendes Abwasser wie Trübe geleitet wird. Nach der Ablagerung der Feststoffe wird das geklärte Wasser abgezogen. Hierzu sind höhenverstellbare Ablaufvorrichtungen bekannt, die ortsfest mit dem Becken verbunden, jedoch durch Auftrieb höhenverstellbar sind.

Eine Anordnung der eingangs genannten Art ist dem DE 297 22 637 U1 zu entnehmen. Durch die aus zwei Rohrelementen bestehenden Auftriebskörper besteht die Möglichkeit, ein Klarwasser abziehendes Rohrelement im gewünschten Umfang auf den Flüssigkeitsspiegel auszurichten. Die den Auftrieb ermöglichenden Rohrelemente sind dabei zu einem Rahmen zusammengesetzt und umgeben das die Öffnungen zum Abziehen des Klarwassers aufweisende Dekantierrohrelement. Das Dekantierrohrelement selbst besteht aus zwei Halbrohren, wobei im Stoßbereich, also mittig in der Umfangswandung des Rohrelementes die Schlitze zum Abziehen des Klarwassers verlaufen. Durch die Anordnung der Schlitze im Mittenbereich des Rohrelementes dient das obere Halbrohr zusätzlich als Auftriebskörper.

Ferner sind Dekantiereinrichtungen bekannt, die von einem verschwenkbaren Rohr ausgehen, an dessen Enden ein die Flüssigkeit abziehendes Rohr verläuft. Abgesehen von der aufwendigen Mechanik, um ein Verschwenken zu ermöglichen, ist der Nachteil gegeben, dass über die Öffnungen des Rohrelements auf der Flüssigkeit angesammelter Schwimmschlamm bzw. Kunststoff- oder Holzteile eindringen können, die zu einem Verstopfen führen können.

Um Flüssigkeit zu dekantieren, ist nach der DE 44 15 978 A1 ein zur Flüssigkeitsoberfläche hin offenes Dekantiergefäß vorgesehen, das mit einem Schwimmer verbunden ist und über den das Dekantiergefäß verschließbar oder freigebbar ist.

Bei einer Klarwasserabzugseinrichtung für Klärbecken nach dem DE 200 01 523 U1 ist ein Auftriebskörper mit einer Tauchwand vorgesehen, gegenüber der ein Verschlussteller dichtend anlegbar ist, nämlich dann, wenn das Eindringen von Schlamm verhindert werden soll.

Um bei einer Anordnung nach dem AT 003 001 U1 Klarwasser abzuziehen, ist ein Offnungen aufweisender Abzugsschlauch vorgesehen. Der Abzugsschlauch selbst geht von einem Anschlusskörper aus, der in seiner Umfangswand Öffnungen zum Abziehen der Flüssigkeit aufweist. Der Anschlusskörper wird geführt von einem Schwimmkörper aufgenommen. Der Schwimmkörper weist eine Bodenwandung auf, gegenüber der eine Bodenplatte des Anschlusskörpers dichtend anlegbar ist, nämlich dann, wenn über die Öffnungen Klarwasser nicht abgezogen werden soll. Um die Öffnungen für das Abwasser frei zugänglich zu machen, muss der Anschlusskörper mittels eines Balgs aus der Führung des Schwimmkörpers herausbewegt werden, wodurch die Bodenplatte des Anschlusskörpers beabstandet zur Bodenfläche des Schwimmkörpers verläuft und somit Flüssigkeit zu den Öffnungen strömen kann.

Nach der der DE 196 36 153 A1 zu entnehmenden Einrichtung zum Abziehen einer Klarwasserschicht wird ein nach oben offener Behälter benutzt. Um ein Eindringen von Schwimmschlamm zu vermeiden, sind Schlammklappen vorgesehen, die mit Auftriebskörpern verbunden sind.

Aus der US 5,358,644 ist ein scheibenförmiges Dekantierelement bekannt, über das Flüssigkeit abziehbar ist. Das Dekantierelement ist entlang einer vertikal verlaufenden Stange verschiebbar, die vom Boden des Flüssigkeitsbehälters ausgeht.

Nach der EP0 979 668 A2 ist es bekannt, das Glaswasser unterhalb der Wasseroberfläche abzuziehen und ein außerhalb des Beckens angeordnetes Absperrorgan nur zu öffnen, wenn klarwasser abgelassen werden soll.

Aus der DE 297 22 637 U1 ist eine gattungsgemäße Anordnung bekannt, bei der zwei Hohlkörper, von denen ein Hohlkörper mit Gas und der andere wahlweise mit Gas oder Flüssigkeit befüllbar ist, parallel zueinander angeordnet sind.

Der vorliegenden Erfindung liegt das Problem zugrunde, eine Anordnung und ein Verfahren der eingangs genannten Art so weiterzubilden, dass ein problemloses Abziehen von Flüssigkeit möglich ist, ohne dass die Gefahr erwächst, dass Schwimmschlamm oder sonstige auf der Flüssigkeitsoberfläche schwimmende Partikel abgezogen werden können, wobei die Vorrichtung konstruktiv einfach und wartungsfreundlich ausgebildet sein soll.

Erfindungsgemäß wird das Problem durch ein Verfahren der eingangs genannten Art dadurch gelöst, dass in dem Dekantierelement dann die Öffnungen verschließende Flüssigkeit angestaut wird, wenn die Öffnungen einen vorgegebenen Abstand zur Flüssigkeitsoberfläche unterschreiten.

Erfindungsgemäß wird in dem Rohrelement, über das die Flüssigkeit abgezogen wird, dann Flüssigkeit angestaut, wenn die Öffnungen in einem Bereich der Flüssigkeit zu liegen kommen, in dem die Gefahr besteht, dass Schwimmschlamm oder sonstige auf der Flüssig-keit schwimmende Partikel abgezogen werden könnten. Dadurch, dass in diesem Fall in dem Rohrelement Flüssigkeit angestaut ist, sind die Öffnungen gegen ein weiteres Eindringen von Flüssigkeit und somit Schwimmschlamm und ähnlichem verschlossen. Erst dann, wenn die Öffnungen im erforderlichen Abstand auf der Flüssigkeitsoberfläche positioniert sind - zum Beispiel in einer Überstauhöhe zwischen 100 und 200 mm - kann über das Rohrelement Flüssigkeit ablaufen und somit über die Öffnung auch Flüssigkeit nachströmen.

Eine Anordnung der eingangs genannten Art zeichnet sich dadurch aus, dass von den zwei Auftriebseinrichtungen mehrere erste Rohrelemente ausgehen, die gemeinsam in einem unterhalb der ersten Rohrelemente verlaufenden zweiten Rohrelement münden, von denen ein Flüssigkeit abführendes Ablaufrohr ausgeht.

Des Weiteren ist vorgesehen, dass das Flüssigkeit schwerkraftbedingt abführende Ablaufrohr zumindest ein flexibles Zwischenelement zur Verlaufsanpassung des Ablaufrohrs in der Flüssigkeit aufweist. Erfindungsgemäß ist das die Flüssigkeit abziehende und mit den Auftriebskörpern verbundene erste Rohrelement mit einem Ablaufrohr verbunden, das als Halterung und Führung für die Gesamtanordnung dient. Zusätzliche Führungen oder die nach dem Stand erforderlichen und eine häufige Wartung erforderlichen Gelenke sind nicht notwendig. Dabei erfolgt eine automatische Anpassung an die Füllstandshöhe des die Flüssigkeit aufnehmenden Behälters bzw. Beckens bzw. SBR über das Ablaufrohr selbst dadurch, dass dieses zumindest ein flexibles Zwischenelement aufweist. Hierdurch bedingt nimmt das Ablaufrohr automatisch den erforderlichen Verlauf innerhalb der Flüssigkeit in Abhängigkeit von dessen Höhe ein.

Um die Auftriebskörper volumenmäßig kleinzuhalten ist des Weiteren vorgesehen, dass das Ablaufrohr aus einem Material besteht, dessen Dichte dem der Flüssigkeit entspricht. Insbesondere ist vorgesehen, dass das Ablaufrohr aus Kunststoff wie HDPE-Material besteht. Hierdurch bedingt muss der Auftriebskörper das Gewicht des Ablaufrohrs nicht kompensieren.

Das Ablaufrohr weist ein Absperrelement auf, um Flüssigkeit bis hin zu den Öffnungen des ersten Rohrs anstauen zu können. Dabei ist insbesondere vorgesehen, dass das Absperrelement außerhalb des Behälters bzw. Beckens angeordnet ist, so dass im Störfall eine problemlose Wartung möglich ist.

Unabhängig hiervon sollten die ersten Rohrelemente senkrecht zu den Auftriebskörpern verlaufen, zu denen wiederum das zweite Rohrelement parallel angeordnet ist.

Um das Ablaufrohr im gewünschten Umfang an den Verlauf der Anordnung in der Flüssigkeit zu ermöglichen, ist vorgesehen, dass das Ablaufrohr zwei Zwischenelemente aufweist, wobei jedes Zwischenelement über Flanschverbindungen einerseits mit einem zu dem zweiten Rohr führenden ersten Anschluss und andererseits mit einem im Bereich einer Behälterwandung verlaufenden zweiten Anschluss verbunden ist.

Um die Zwischenelemente, die in Form von Gummimanschetten ausgebildet sein können, gegen Zugbelastungen zu schützen, ist vorgesehen, dass die das Zwischenelement begrenzenden Flansche zur Zugentlastung des Zwischenelementes über zumindest ein Gelenkelement verbunden sind.

Um die Auftriebskörper im erforderlichen Umfang mit Gas zu befüllen bzw. mit Flüssigkeit fluten zu können, ist vorgesehen, dass die wahlweise mit Gas und/oder Flüssigkeit befüllbaren Hohlkörper mit einer gemeinsamen Druckluftleitung verbunden sind, über die einerseits zum Entleeren der Hohlkörper Druckluft einspeisbar ist und andererseits beim Fluten der Hohlkörper Gas ableitbar ist. Dabei kann die Druckluftleitung über ein Ventil wahlweise mit einer Druckluftquelle bzw. mit der Umgebungsluft verbunden sein. Die Druckluftleitung endet selbst oberhalb der maximalen Höhe des Flüssigkeitsspiegels, um auszuschließen, dass gegebenenfalls eindringende Flüssigkeit herausströmen kann.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus dem der Zeichnung zu entnehmenden bevorzugten Ausführungsbeispiel.

Es zeigen:
- Fig. 1: einen Ausschnitt aus einem Belüftungsbecken,
- Fig. 2: einen Schnitt der Linie II-II in Fig. 1 und
- Fig. 3: einen Ausschnitt der Fig. 2 in vergrößerter Darstellung.

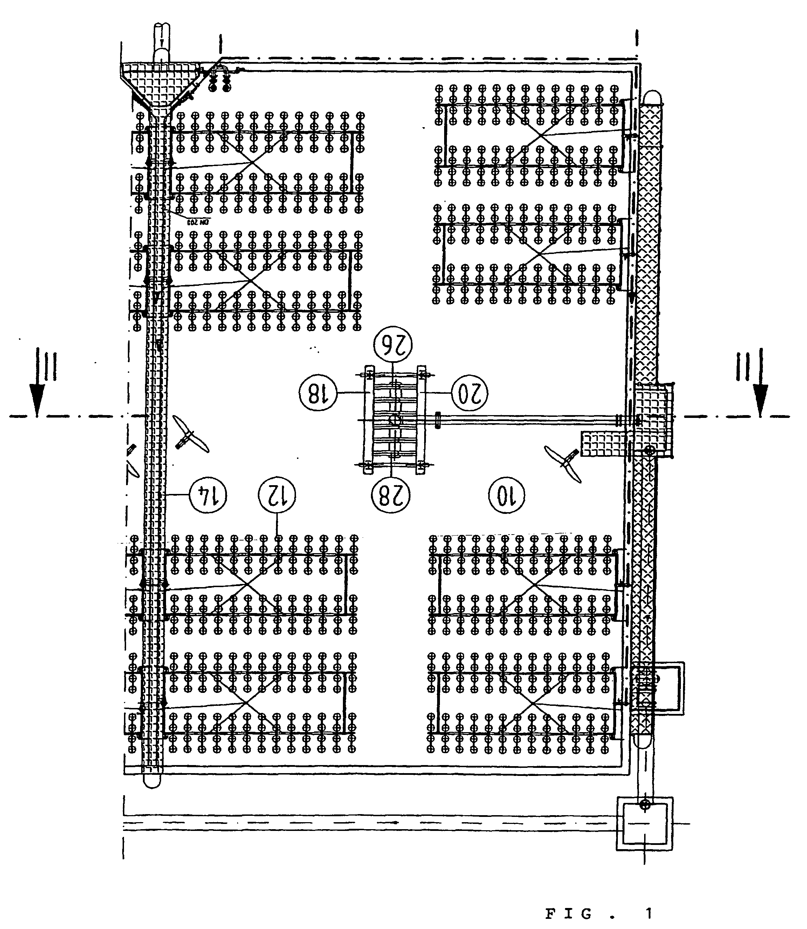

In Fig. 1 ist ein Ausschnitt eines Beckens 10 einer einstufigen Belebschlammanlage dargestellt, ein sogeannter SBR (Sequence Batch Reactor), in dem Abwasser 15 biologisch gereinigt wird. Hierzu wird zu reinigendes Abwasser dem Becken 10 zugeführt und über im Bodenbereich vorhandene Plattenbelüfter 12 oder sonstige bekannte Belüftungseinrichtungen belüftet. Hierdurch entstehender Schlamm im Bodenbereich setzt sich ab, so dass oberhalb von diesem Klarwasser anfällt, das von Zeit zu Zeit abzuziehen ist, um das Becken 10 mit neuem zu reinigenden Abwasser zu befüllen. Dabei kann ein Becken, das zum Beispiel Abmessungen von 30 x 45 m² aufweisen kann, durch Trennwände 14 unterteilt werden, um diese abwechselnd mit Abwasser zu beschicken, so dass in einem Teil eine Belüftung und in dem anderen Teil nach dem Belüften ein Abziehen von Klarwasser erfolgen kann.

Um mit konstruktiv einfachen Maßnahmen das Klarwasser abzuziehen, wobei eine automatische Anpassung an das Flüssigkeitsniveau 16 erfolgt, sind in dem Becken Auftriebskörper 18, 20 angeordnet, von denen Öffnungen 22, 24 aufweisende erste Rohrelemente 26, 28 oder Dekantierrohre ausgehen, über die das Klarwasser abgezogen wird.

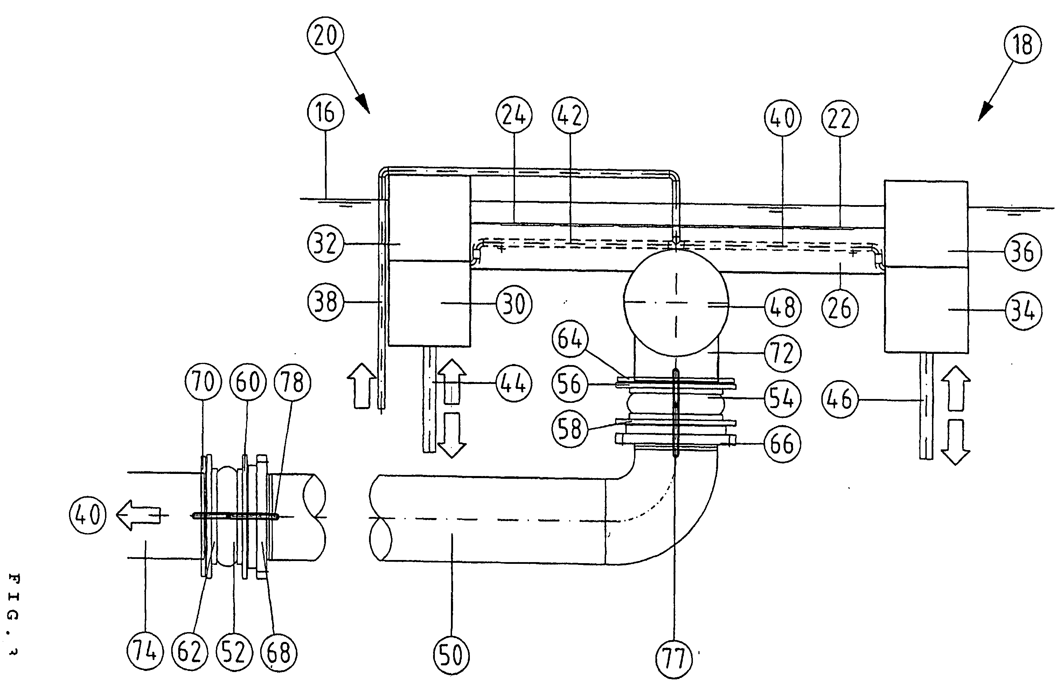

Wie die Figuren verdeutlichen, bestehen die Auftriebskörper 18, 20 jeweils aus zwei übereinander angeordneten Hohlkörper 30, 32 bzw. 34, 36, von denen der jeweils obere Rohrkörper 34, 36 mit Gas befüllt ist und der untere Hohlkörper 30, 32 im gewünschten Umfang mit Flüssigkeit geflutet oder mit Gas gefüllt ist. Hierdurch erfahren die Auftriebskörper 18, 20 in der in dem Becken 10 vorhandenen Flüssigkeit 15 den erforderlichen Auftrieb, um also die von den Auftriebskörpern 18, 20 ausgehenden die Öffnungen 22, 24 aufweisenden Dekantierrohre 26, 28, über die das Klarwasser abgezogen wird, auf das Flüssigkeitsniveau 16 abstandsmäßig einzustellen. Dabei ist der Auftrieb auf die ersten Rohrelemente 26, 28 derart abgestellt, dass sich eine Überstauhöhe für die Öffnungen 22, 24 von in etwa 100 - 200 mm ergibt. Die Öffnungen 22, 24 selbst verlaufen im oberen Scheitelbereich entlang der Längsachse der jeweiligen Rohrelemente 26, 28, wie sowohl die Draufsicht gemäß Fig. 1 als auch die Schnittdarstellung gemäß Fig. 3 verdeutlichen.

Um die unteren Hohlkörper 30, 34, die wie die oberen Hohlkörper 32, 36 im Ausführungsbeispiel als Vierkantrohre ausgebildet sind, im erforderlichen Umfang fluten zu können bzw. mit Luft zu befüllen, ist eine Leitung 38 vorgesehen, die über Leitungsabschnitte 40, 42 mit den Hohlkörpern 30, 34 verbunden ist. Die Leitung 38 verläuft außerhalb der Beckenwandung 40 und endet oberhalb des Flüssigkeitsspiegels 16 und ist wahlweise mit einer nicht dargestellten Druckluftquelle bzw. mit der Umgebungsluft verbunden. Letzteres ist dann der Fall, wenn die Hohlkörper 30, 34 geflutet werden sollen. Hierzu gehen von den Hohlkörpern 30, 34 Rohre 44, 46 aus. Wird folglich die Leitung 38 bzw. der außerhalb des Beckens hin verlaufende Abschnitt 41 geöffnet, so kann über die Rohre 44, 46 in die Hohlkörper 30, 34 Flüssigkeit eindringen, wobei gleichzeitig das Gas über die Leitungen 40, 42, 38 herausgedrückt wird.

Die die Öffnungen 22, 24 aufweisenden Dekantierrohre 26, 28, die zwischen senkrecht zu den parallel zueinander verlaufenden zwei Auftriebskörpern 18, 20 angeordnet sind, sind ihrerseits mit einem zweiten Rohrelement 48 verbunden, über das die über die Öffnungen 22, 24 abgezogene Flüssigkeit einem Ablaufrohr 50 schwerkraftbedingt zufließt, von der die Flüssigkeit zum Beckenäußeren ebenfalls schwerkraftbedingt weggeführt wird.

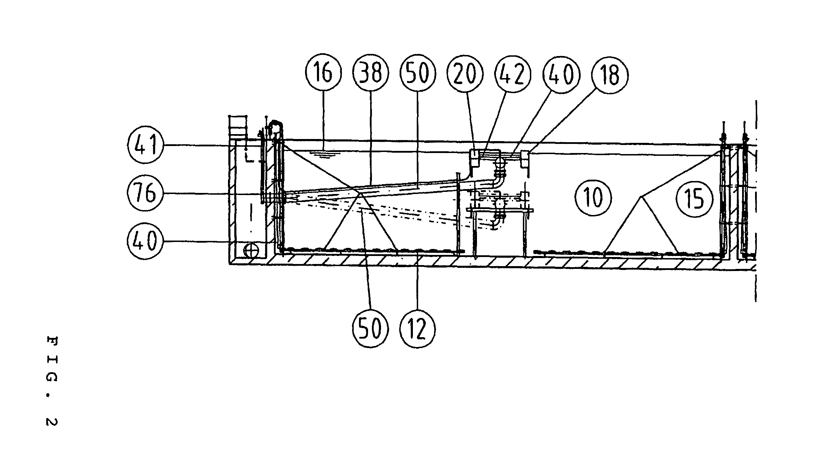

Da in Abhängigkeit von der abgezogenen Klarwassermenge der Flüssigkeitsspiegel 16 und damit die Anordnung zum Abziehen dieser sinkt (durchgezogene und gestrichelte Darstellung in Fig. 2), darf das Ablaufrohr 50 eine Behinderung nicht darstellen. Vielmehr muss sich dieses automatisch dem der Position der Anordnung anpassen. Hierzu weist das Ablaufrohr 50 flexible Zwischenelemente oder Kompensatoren 52, 54 auf, die aus Gummimaterial bestehen und endseitig von Flanschen 56, 58, 60, 62 begrenzt sind, die wiederum mit Flanschen 64, 66, 68, 70 verschraubt sind, die von dem Ablaufrohr 50 bzw. Anschlussstutzen 72, 74 ausgehen, die zu dem zweiten Rohrelement 48 bzw. zur Beckenwandung 40 führen. Um die Zwischen- bzw. Ausgleichselemente 52, 54 gegen Zugbeanspruchung zu entlasten, sind Gelenkverbindungen 77 vorgesehen, die von den untereinander verbundenen Flanschen 58, 66, 56, 64, 60, 68 bzw. 62, 70 ausgehen und insbesondere durch die jeweiligen Flanschschrauben fixiert sind. Andere geeignete Konstruktionen sind gleichfalls möglich, um eine Zugentlastung der Zwischenelemente 52, 54 sicherzustellen.

Des Weiteren ist das Ablaufrohr 50, und zwar vom Beckenäußeren, mittels eines Absperrelementes 76 verschließbar, um in dem Ablaufrohr 50, dem zweiten Rohrelement 48 sowie den ersten die Öffnungen 22, 24 aufweisenden Rohrelementen 26, 28 Flüssigkeit anstauen zu können. Dies ist dann notwendig, wenn die Öffnungen 22, 24 einen zu geringen Abstand zur Flüssigkeitsoberfläche 16 aufweisen sollten, da in diesem Fall die Gefahr bestünde, dass dann, wenn die Öffnungen 22, 24 der ersten Rohrelemente 26, 28 frei sind, Schwimmschlamm oder sonstige auf der Flüssigkeit schwimmende Partikel wie Holz oder Kunststoff eindringen und damit die Anordnung zum Abziehen des Klarwasser verstopfen könnten. Das Absperrelement 76 gibt das Ablaufrohr 50 erst dann frei, wenn die ersten Rohrelemente 26, 28 mit ihren Öffnungen 22, 24 im erforderlichen Abstand zu der Flüssigkeitsoberfläche 16 verlaufen.

Um die Auftriebskörper 18, 20 klein dimensionieren zu können, ist des Weiteren vorgesehen, dass zumindest das Ablaufrohr 50 aus einem Material besteht, dessen Dichte etwa dem der Flüssigkeit entspricht. Vorzugsweise werden Kunststoffrohre insbesondere solche aus HDPE benutzt.

Um die Überstandshöhe zwischen den Öffnungen 22, 24 zum Flüssigkeitsspiegel 16 zu überwachen, können von den Auftriebseinrichtungen 18, 20 Überwachungseinrichtungen wie Sensoren ausgehen, die dann das Absperrelement 76 verschließen, wenn die Gefahr besteht, dass die Öffnungen 22, 24 in zu geringem Abstand zu der Flüssigkeitsoberfläche 16 mit der Folge verlaufen könnten, dass Schwimmschlamm oder sonstige Elemente wie Holz oder Kunststoff über die Öffnungen 22, 24 abgezogen werden könnten.

## Patentansprüche

1. Anordnung zum Abziehen von Flüssigkeit aus einem Behälter (10) wie einem Becken, insbesondere zum Abziehen von Klarwasser aus einem SBR, umfassend zumindest eine Auftriebseinrichtung (18, 20) in Form von zwei über- und/oder nebeneinander angeordneten Hohlkörpern (30, 32; 34, 36), von denen ein Hohlkörper mit Gas (32, 36) und der andere Hohlkörper (30, 34) wahlweise mit Gas oder Flüssigkeit befüllbar ist, sowie zumindest ein von der Auftriebseinrichtung ausgehendes, Öffnungen (22, 24) zum Ableiten der Flüssigkeit aufweisendes Rohrelement (26, 28), wobei die Anordnung zwei parallel zueinander verlaufende Auftriebseinrichtungen (18, 20) aufweist,
**dadurch gekennzeichnet, dass**
von den zwei Auftriebseinrichtungen mehrere erste Rohrelemente (26, 28) ausgehen, die gemeinsam in einem unterhalb der ersten Rohrelemente verlaufenden zweiten Rohrelement (48) münden, von denen ein Flüssigkeit abführendes Ablaufrohr (50) ausgeht.

2. Anordnung nach Anspruch 1,
**dadurch gekennzeichnet,**
**dass** die ersten Rohrelemente (26, 28) senkrecht zu den Auftriebskörpern (30, 32, 34, 36) verlaufen und/oder das zweite Rohrelement (48) parallel zu den Auftriebskörpern (30, 32, 34, 36) angeordnet ist.

3. Anordnung nach Anspruch 1,
**dadurch gekennzeichnet,**
**dass** das die Flüssigkeit schwerkraftbedingt abführende Ablaufrohr (50) zumindest ein flexibles Zwischenelement (52, 54) zur Verlaufsanpassung des Ablaufrohrs in der Flüssigkeit aufweist.

4. Anordnung nach Anspruch 1 oder 2,
**dadurch gekennzeichnet,**
**dass** das Ablaufrohr (50) ein Absperrelement (76) zum Aufstauen von Flüssigkeit in dem Ablaufrohr, dem zweiten Rohrelement (48) und den ersten Rohrelementen (26, 28) bis zu deren Öffnungen (22, 24) aufweist.

5. Anordnung nach Anspruch 4,
**dadurch gekennzeichnet,**
**dass** das Absperrelement (76) außerhalb des Behälters (10) angeordnet ist.

6. Anordnung nach zumindest einem der vorhergehenden Ansprüche,
**dadurch gekennzeichnet,**
**dass** das Ablaufrohr (50) zumindest zwei Zwischenelemente (52, 54) aufweist und dass jedes Zwischenelement über Flanschverbindungen einerseits mit dem zweiten Rohr (48) und andererseits mit einem im Bereich einer Behälterwandung (40) verlaufendem Anschluss verbunden ist.

7. Anordnung nach Anspruch 6,
**dadurch gekennzeichnet,**
**dass** die die Zwischenelemente (52, 54) begrenzenden Flansche (56, 58, 60, 62, 64, 66, 68, 70) zur Zugentlastung der Zwischenelemente über Gelenkelemente (76) verbunden sind.

8. Anordnung nach zumindest einem der vorhergehenden Ansprüche,
**dadurch gekennzeichnet,**
**dass** die wahlweise mit Gas und/oder Flüssigkeit befüllbaren Hohlkörper (30, 34) mit einer Druckluftleitung (38, 40, 42) verbunden sind, über die einerseits zum Entleeren der Hohlkörper Druckluft einspeisbar und andererseits beim Fluten der Hohlkörper Gas ableitbar ist.

9. Anordnung nach zumindest einem der vorhergehenden Ansprüche,
**dadurch gekennzeichnet,**
**dass** das Ablaufrohr (50) aus Kunststoff wie HDPE besteht.

10. Verfahren zum Abziehen von Flüssigkeit aus einem Behälter (10) wie Becken, insbesondere Klarwasser aus einem SBR, über ein von einem Auftriebskörper (18, 20, 30, 32, 34, 36) ausgehendes Öffnungen (22, 24) zum Abziehen der Flüssigkeit aufweisendes insbesondere rohrförmiges Dekantierelement (26, 28),
**dadurch gekennzeichnet,**
**dass** in dem Dekantierelement (26, 28) dann die die Öffnungen (22, 24) verschließende Flüssigkeit angestaut wird, wenn die Öffnungen einen vorgegebenen Abstand zur Flüssigkeitsoberfläche (16) unterschreiten.

11. Verfahren nach Anspruch 10,
**dadurch gekennzeichnet,**
**dass** bei Erreichen oder kurz vor Erreichen des Abstandes zur Flüssigkeitsoberfläche (16) das Dekantierelement (26, 28) oder ein von diesen ausgehendes Ablaufrohr (50) abgesperrt wird, so dass aus dem Behälter (10) nachströmende Flüssigkeit in dem Dekanterielement angestaut wird.

12. Verfahren nach Anspruch 10,
**dadurch gekennzeichnet,**
**dass** zum Anstauen der Flüssigkeit das von dem Dekantierelement (26, 28) ausgehende Ablaufrohr (50) außerhalb des Behälters (10) abgesperrt wird.

13. Verfahren nach Anspruch 10 oder Anspruch 11,
**dadurch gekennzeichnet, dass** die Öffnungen (22,24) in einem Abstand zwischen 100 mm und 200 mm zur Flüssigkeitsoberfläche (12) positioniert werden und dann über das Dekantierelement (26,28) Flüssigkeit abläuft und somit über die Öffnungen (22,24) Flüssigkeit nachströmt.

## Claims

1. Arrangement for drawing off liquid from a tank (10), in particular for drawing off clear water from an SBR, comprising at least one float unit (18, 20) in the form of two hollow elements (30, 32; 34, 36) arranged above and/or adjacent to one another, of which one hollow element (32, 36) can be filled with gas and the other hollow element (30, 34) optionally with gas or liquid, and at least one pipe element (26, 28) extending from the float unit and having openings (22, 24) for draining off liquid, said arrangement having two float units (18, 20) running parallel to one another,
wherein
several first pipe elements (26, 28) extend from the two float units and discharge jointly into a second pipe element (48) running underneath the first pipe elements and from which extends an outflow pipe (50) draining off the liquid.

2. Arrangement according to Claim 1,
wherein
the first pipe elements (26, 28) are perpendicular to the float elements (30, 32, 34, 36) and/or the second pipe element (48) is arranged parallel to the float elements (30, 32, 34, 36).

3. Arrangement according to Claim 1,
wherein
the outflow pipe (50) draining off the liquid by gravity has at least one flexible intermediate element (52, 54) for adjustment of the angle of the outflow pipe.

4. Arrangement according to Claim 1 or 2,
wherein
the outflow pipe (50) has a shut-off element (76) for banking up the liquid in the outflow pipe, the first pipe element (48) and the first pipe elements (26, 28) up to their openings (22, 24).

5. Arrangement according to Claim 4,
wherein
the shut-off element (76) is arranged outside the tank (10).

6. Arrangement according to at least one of the previous claims,
wherein
the outflow pipe (50) has at least two intermediate elements (52, 54) and wherein each intermediate element is flange-connected on the one side to the second pipe (48) and on the other side to a connection running in the area of a tank wall (40).

7. Arrangement according to Claim 6,
wherein
the flanges (56, 58, 60, 62, 64, 66, 68, 70) limiting the intermediate elements (52, 54) are connected using articulated elements (77) to relieve the strain on the intermediate elements.

8. Arrangement according to at least one of the previous claims,
wherein
the hollow elements (30, 34) optionally fillable with gas and/or liquid are connected to a compressed air line (38, 40, 42) via which one the one hand compressed air can be fed in to empty the hollow elements and on the other hand gas can be drawn off when the hollow element is flooded.

9. Arrangement according to at least one of the previous claims,
wherein
the outflow pipe (50) comprises plastic such as HDPE.

10. Method for drawing off liquid from a tank (10), in particular of clear water from an SBR, via a decanting element (26, 28), in particular cylindrical, extending from a float element (18, 20, 30, 32, 34, 36) and having openings (22, 24) for drawing off the liquid,
wherein
in the decanting element (26, 28) the liquid closing the openings (22, 24) is banked up when the openings fall below a specified distance from the liquid surface (16).

11. Method according to Claim 10,
wherein
upon reaching or shortly before reaching the distance from the liquid surface (16), the decanting element (26, 28) or an outflow pipe (50) extending therefrom is shut off such that liquid still flowing out of the tank (10) is banked up in the decanting element.

12. Method according to Claim 10,
wherein
the outflow pipe (50) extending from the decanting element (26, 28) is shut off outside the tank (10) in order to bank up the liquid .

13. Method according to Claim 10 or 11,
wherein
the openings (22, 24) are positioned at a distance of between 100 mm and 200 mm from the liquid surface (16) and liquid then flows off via the decanting element (26, 28) and hence continues to flow via the openings (22, 24).

## Revendications

1. Arrangement pour retirer du liquide d'un récipient (10) tel qu'un bassin, en particulier pour retirer de l'eau clarifiée d'un SBR (Sequence batch reactor - réacteur séquentiel discontinu), comprenant au moins un dispositif flottant (18, 20) sous forme de deux corps creux (30, 32 ; 34, 36) disposés l'un sur l'autre et/ou côte à côte, dont l'un peut être rempli de gaz (32, 36) et l'autre (30, 34) peut être rempli au choix de gaz ou d'un liquide, ainsi qu'au moins un élément tubulaire (26, 28) sortant du dispositif flottant et présentant des ouvertures (22, 24) destinées à évacuer le liquide,
**caractérisé en ce que** des deux dispositifs flottants sortent plusieurs premiers éléments tubulaires (26, 28) qui aboutissent ensemble dans un deuxième élément tubulaire (48) s'étendant au-dessous des premiers éléments tubulaires, et duquel sort un tuyau de décharge (50) évacuant le liquide.

2. Arrangement selon la revendication 1,
**caractérisé en ce que**
les premiers éléments tubulaires (26, 28) s'étendent perpendiculairement par rapport aux corps flottants (30, 32, 34, 36) et/ou que le deuxième élément tubulaire (48) est disposé parallèlement aux corps flottants (30, 32, 34, 36).

3. Arrangement selon la revendication 1,
**caractérisé en ce que**
le tuyau de décharge (50) évacuant le liquide par gravité présente au moins un élément intermédiaire souple (52, 54) destiné à adapter le tracé du tuyau de décharge dans le liquide.

4. Arrangement selon la revendication 1 ou 2,
**caractérisé en ce que**
le tuyau de décharge (50) présente un élément d'obturation (76) destiné à retenir le liquide dans le tuyau de décharge, dans le deuxième élément tubulaire (48) et dans les premiers éléments tubulaires (26, 28) jusqu'à leurs ouvertures (22, 24).

5. Arrangement selon la revendication 4,
**caractérisé en ce que**
l'élément d'obturation (76) est disposé à l'extérieur du récipient (10).

6. Arrangement selon au moins l'une des revendications précédentes,
**caractérisé en ce que**
le tuyau de décharge (50) présente au moins deux éléments intermédiaires (52, 54) et que chaque élément intermédiaire est relié d'une part au deuxième tube (48) par des raccords à brides et d'autre part à un raccord situé dans la zone d'une paroi (40) du récipient.

7. Arrangement selon la revendication 6,
**caractérisé en ce que**
les brides (56, 58, 60, 62, 64, 66, 68, 70) limitant les éléments intermédiaires (52, 54) sont reliées par des éléments articulés (77) afin de décharger en traction les éléments intermédiaires.

8. Arrangement selon au moins l'une des revendications précédentes,
**caractérisé en ce que**
les corps creux (30, 34) pouvant être remplis au choix de gaz et/ou de liquide sont reliés à une conduite d'air comprimé (38, 40, 42) par l'intermédiaire de laquelle d'une part de l'air comprimé peut être introduit pour vider les corps creux et d'autre part du gaz peut être évacué lors du remplissage des corps creux.

9. Arrangement selon au moins l'une des revendications précédentes,
**caractérisé en ce que**
le tuyau de décharge (50) est constitué de matière plastique telle que du HDPE.

10. Procédé pour retirer du liquide d'un récipient (10) tel qu'un bassin, en particulier de l'eau clarifiée d'un SBR par l'intermédiaire d'un élément de décantation (26, 28), en particulier tubulaire, sortant d'un corps flottant (18, 20, 30, 32, 34, 36) et présentant des ouvertures (22, 24) destinées au retrait du liquide,
**caractérisé en ce que**
dans l'élément de décantation (26, 28), le liquide obturant les ouvertures (22, 24) est retenu quand les ouvertures sont situées à une distance de la surface du liquide (16) inférieure à une distance consignée.

11. Procédé selon la revendication 10,
**caractérisé en ce que**
lorsque la distance à la surface du liquide (16) est atteinte ou est près d'être atteinte, l'élément de décantation (26, 28) ou un tuyau de décharge (50) sortant de celui-ci est obturé, de sorte que le liquide s'écoulant du récipient (10) est retenu dans l'élément de décantation.

12. Procédé selon la revendication 10,
**caractérisé en ce que**
pour retenir le liquide, le tuyau de décharge (50) sortant de l'élément de décantation (26, 28) est obturé à l'extérieur du récipient (10).

13. Procédé selon la revendication 10 ou 11,
**caractérisé en ce que**
les ouvertures (22, 24) sont positionnées à une distance entre 100 mm et 200 mm de la surface du liquide (16) et qu'alors du liquide s'écoule au-dessus de l'élément de décantation (26, 28) et qu'ainsi du liquide continue de couler par les ouvertures (22, 24).
